# EUROPEAN PATENT APPLICATION

(11) **EP 4 772 300 A1**
(43) Date of publication of application: **08.07.2026**
(21) Application number: 25788411.4
(22) Date of filing: 27.05.2025
(51) Int. Cl.: B23K 1/00, B23K 37/00, G01N 21/84

(54) **WELDING JIG INSPECTION TABLE FOR CYLINDRICAL SECONDARY BATTERY AND METHOD FOR INSPECTING WELDING JIG FOR CYLINDRICAL SECONDARY BATTERY USING SAME**

(30) Priority: 14.11.2024 KR 20240161847
(71) Applicant: LG Energy Solution, Ltd., Seoul 07335 (KR)
(72) Inventor: LEE, Heechan, Deajeon 34122 (KR); KIM, Mintae, Deajeon 34122 (KR); HWANG, Joongha, Deajeon 34122 (KR); LEE, Junoh, Deajeon 34122 (KR)
(74) Representative: Goddar, Heinz J.
(86) International application number: PCT/KR2025/007121
(87) International publication number: WO 2026/105995

(57) **Abstract**

A welding jig inspection table for inspecting a welding jig used in manufacturing a cylindrical secondary battery includes a base plate horizontally disposed, the base plate having an upper surface configured to support the welding jig, a master electrode assembly having a first through-hole extending along a length direction at a radial center of the master electrode assembly, the master electrode assembly being transversely disposed in the welding jig, a master jig disposed on a first side of the base plate, the master jig having a third through-hole configured to be concentrically arranged with the first through-hole of the master electrode assembly, and a plurality of master pins having mutually different diameters, each master pin having a predetermined length, each master pin being configured to be inserted into the third through-hole of the master jig after passing through the first through-hole of the master electrode assembly.

## Description

### [TECHNICAL FIELD]

The present disclosure relates to a welding jig inspection table for a cylindrical secondary battery and a welding jig inspection method for a cylindrical secondary battery by using the welding jig inspection table. Specifically, the present disclosure relates to a welding jig inspection table for a cylindrical secondary battery and a welding jig inspection method using the same for a cylindrical secondary battery, in which an unnecessary time consumed in inspecting a welding jig is reduced by locating the welding jig inside a manufacturing line of the cylindrical secondary battery and the welding jig is quickly and conveniently inspected.

### [BACKGROUND ART]

Secondary batteries, which are highly applicable to a product group and which have electrical characteristics such as high energy density, are universally applied not only to portable devices but also to electric vehicles (EVs) or hybrid electric vehicles (HEVs) driven by electrical power sources.

The secondary batteries have attracted attention as new energy sources for improving environmental friendliness and energy efficiency since the secondary batteries not only have a primary advantage of drastically reducing use of fossil fuels, but also have another advantage in that by-products are not generated at all from energy use.

Depending on a structure of an electrode assembly having a structure of a positive electrode / a separator / a negative electrode, the secondary batteries may include a jelly-roll (winding type) electrode assembly in which long sheet-shaped positive electrodes and negative electrodes are wound in a state where a separator is interposed therebetween, a stack-type (laminated-type) electrode assembly in which multiple positive electrodes and negative electrodes cut into units of a predetermined size are sequentially laminated in a state where a separator is interposed therebetween, and a stack/folding-type electrode assembly in which bicells or full cells laminated in a state where a separator is interposed between positive electrodes and negative electrodes in predetermined units are wound.

In addition, depending on a shape of a battery case, the secondary batteries are classified into cylindrical batteries and prismatic batteries in which the electrode assembly is built into a cylindrical or prismatic metal can, and pouch-type batteries in which the electrode assembly is built into a pouch-type case made of an aluminum laminate sheet.

In the secondary battery configured in this way (particularly, the secondary battery including the stack-type electrode assembly), one end of an electrode (positive electrode, negative electrode) is provided with an electrode tab connected to a lead portion connecting the electrode and an external terminal. The electrode tab protrudes to one side of the electrode assembly.

In this case, the lead portion and the electrode tab are mainly connected through welding methods such as resistance welding (welding in which joint portions are brought into a semi-molten state by resistance heat generated by causing a large current to flow to a joint portion of a parent material, and a pressure is applied to and join the joint portion), laser welding, and ultrasonic welding.

In addition, in a case of a cylindrical secondary battery, a negative electrode tab is subjected to resistance welding to a can. Therefore, the can acts as a negative electrode terminal.

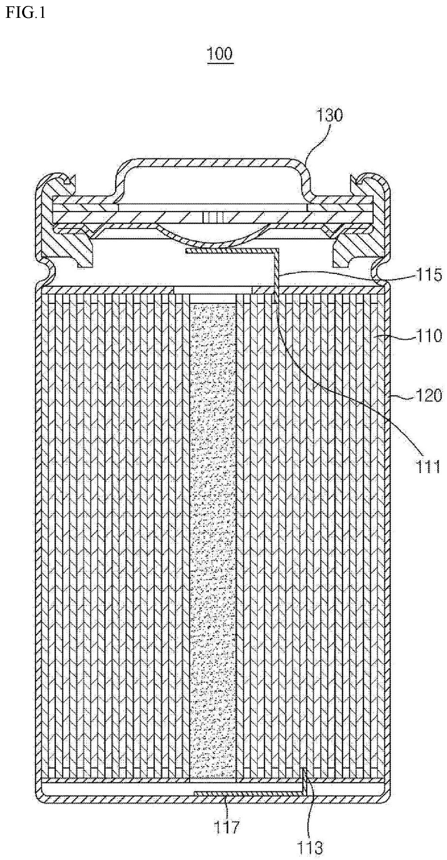

FIG. 1 is a diagram schematically illustrating a vertical cross section of a typical cylindrical secondary battery.

More specifically, as illustrated in FIG. 1, a cylindrical secondary battery 100 includes an electrode assembly 110 including a positive electrode 111, a negative electrode 113, and a separator, a can 120 internally accommodating the electrode assembly 110 and having an opening formed in an upper end, and a cap assembly 130 that closes or blocks an opening portion in the upper end of the can 120.

In addition, the positive electrode 111 of the electrode assembly 110 is connected to a positive electrode tab 115, and the positive electrode tab 115 is connected to the cap assembly 130 by welding.

In addition, a negative electrode tab 117 is connected to the negative electrode 113 of the electrode assembly 110, and the negative electrode tab 117 is connected to a bottom surface of the can 120 through resistance welding.

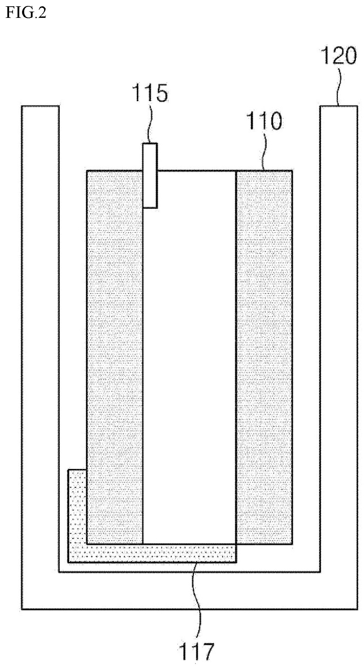

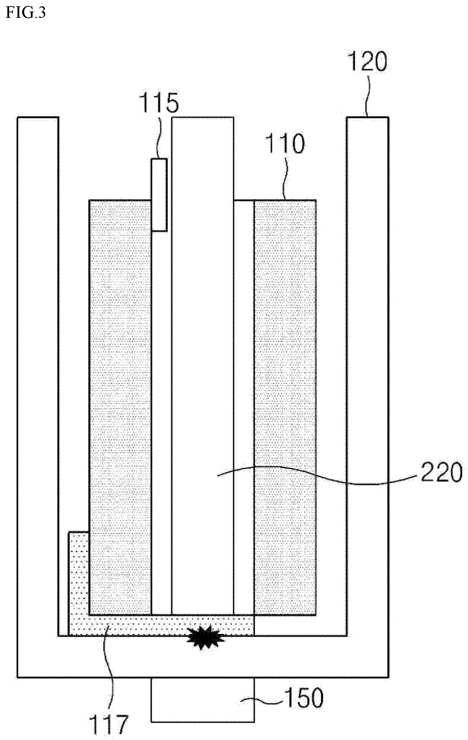

FIG. 2 is a diagram schematically illustrating a state before the negative electrode tab of the typical cylindrical secondary battery is subjected to resistance welding to the can, and FIG. 3 is a diagram schematically illustrating a state where a welding rod is inserted into the typical cylindrical secondary battery and the negative electrode tab is welded to the can.

As illustrated in FIG. 2, the negative electrode tab 117 of the typical cylindrical secondary battery 100 is connected to the negative electrode, and is extended to and drawn out of a lower end of the electrode assembly 110.

As illustrated in FIG. 3, the negative electrode tab 117 is electrically connected to a bottom surface of the can 120 through resistance welding.

More specifically, first, as illustrated in FIG. 2, the electrode assembly 110 is stored inside the can 120 through an upper opening portion of the can 120.

Thereafter, as illustrated in FIG. 3, in order to weld the negative electrode tab 117 and the bottom surface of the can 120, a welding rod 220 is inserted into a hollow formed in the center of the electrode assembly 110 from the upper opening portion of the can 120, and subsequently, the negative electrode tab 117 and the bottom surface of the can 120 are welded and fixed by the welding rod 220 inserted into the can 120 and a welding member 150 provided outside the can 120.

However, in a case where the negative electrode tab is subjected to resistance welding to the can as described above, when a welding angle is not correct, a spatter phenomenon may occur in which molten metal fine particles are scattered around a welding portion. Consequently, there is a problem of low-voltage defects.

That is, this problem occurs due to influence of verticality of the welding rod. When welding surfaces of the welding rod and a welding target workpiece (that is, the negative electrode tab and the can) are not vertical (that is, the verticality is no longer maintained), a contact area decreases, and the spatter phenomenon occurs due to over-melting caused by an increase in heat generation.

Meanwhile, in the related art, in order to inspect a welding jig used in manufacturing the cylindrical secondary battery, the welding jig is removed and a request for 3D measurement is made to an external company, or dimensions for concentricity/verticality/horizontalness are checked through measuring equipment owned by the company.

In this way, the related art has a problem in that excessive manpower and time are consumed in removing the welding jig, carrying out the welding jig, inspecting the welding jig, and deriving and analyzing an inspection result.

### (Prior Art Document)

### (Patent Document)

Korean Patent No. 10-2023-0053831A (2023.04.24)

### [DETAILED DESCRIPTION OF INVENTION]

### [TECHNICAL PROBLEMS]

The present disclosure has been made to solve various problems in the related art as described above, and an object of the present disclosure is to provide a welding jig inspection table for a cylindrical secondary battery and a welding jig inspection method using the jig inspection table for a cylindrical secondary battery, in which an unnecessary time consumed in inspecting a welding jig is reduced by locating the welding jig inside a manufacturing line of the cylindrical secondary battery and the welding jig is quickly and conveniently inspected.

### [TECHNICAL SOLUTION]

According to a first aspect of the present disclosure, in order to achieve the above-described object, there is provided a welding jig inspection table for inspecting a welding jig used in manufacturing a cylindrical secondary battery. The welding jig inspection table includes a base plate horizontally disposed, the base plate having an upper surface configured to support the welding jig, a master electrode assembly having a first through-hole extending along a longitudinal direction at a radial center of the master electrode assembly, the master electrode assembly being transversely disposed in the welding jig, a master jig disposed on a first side of the base plate, the master jig having a third through-hole configured to be concentrically arranged with the first through-hole of the master electrode assembly, and a plurality of master pins having mutually different diameters, each master pin having a predetermined length, each master pin being configured to be inserted into the third through-hole of the master jig after passing through the first through-hole of the master electrode assembly.

The welding jig inspection table may further include a frame located at a lower portion of the base plate, the frame being configured to support the base plate. The frame may have a predetermined height, and is provided to adjust a height when necessary.

A plurality of pedestals may be located at a lower end of the frame.

A plurality of welding jigs may be provided, and the base plate may include a plurality of first fastening holes such that the plurality of welding jigs are separated from each other while being fastened to the base plate.

The master electrode assembly may be provided in plurality such that each master electrode assembly is disposed in a corresponding one of the plurality of welding jigs.

The base plate may include a second fastening hole, the master electrode assembly may include a third fastening groove configured to communicate with the second fastening hole, and a fastening mechanism may be fastened to the third fastening groove through the second fastening hole.

The third through-hole may be provided in plurality in the master jig such that each of the third through-holes is located concentrically with the first through-hole of the master electrode assembly disposed in each of the plurality of welding jigs.

The master electrode assembly may be configured to have a shape of a jelly roll electrode assembly.

The master electrode assembly may include a plurality of second through-holes spaced around the first through-hole of the master electrode assembly, and may extend along the length direction of the master electrode assembly.

The welding jig may have an open upper portion, and the welding jig may have a mounting space configured to support the master electrode assembly when the master electrode assembly is mounted through the open upper portion.

An inner surface of the mounting space may be configured to correspond to an outer surface of the master electrode assembly.

Fixing members are configured to fix the master electrode assembly at a front side and a rear side of the mounting space, each fixing member may include a fourth through-hole at a center thereof, the fourth through-hole of the master electrode assembly may be located concentrically with the first through-hole of the master electrode assembly and the third through-hole of the master jig.

Meanwhile, according to a second aspect of the present disclosure, there is provided a method of inspecting a welding jig that uses the welding jig inspection table described above. The welding jig inspection method includes sequentially inserting the master pins into the third through-hole of the master jig through the first through-hole of the master electrode from a master pin having a smaller diameter to a master pin having a larger diameter until the master pins are no longer insertable into the first through-hole and the third through-hole, and identifying a concentricity level based on the diameters of the master pins that are not insertable into the first through-hole and the third through-hole.

### [EFFECT OF INVENTION]

According to the above-described technical solution, the present disclosure has the following advantageous effects.

The present disclosure achieves an advantageous effect as follows. The welding jig inspection table including the frame, the base plate, the master electrode assembly, the master jig, and the master pin is located inside a manufacturing line of the cylindrical secondary battery. In this manner, an unnecessary time consumed in inspecting the welding jig may be reduced, and the welding jig may be quickly and conveniently inspected.

In addition, the present disclosure achieves an advantageous effect as follows. The plurality of welding jigs are disposed in the welding jig inspection table, and multiple welding jigs are inspected during a single inspection operation. In this manner, an inspection time may be significantly reduced, and costs for the inspection may be reduced.

In addition, the present disclosure achieves an advantageous effect as follows. A weight of the master electrode assembly is reduced by forming the plurality of second through-holes around the first through-hole of the master electrode assembly. In this manner, when the master electrode assembly is repeatedly fastened to and separated from the welding jig, deformation of the welding jig may be prevented.

Moreover, the present disclosure achieves an advantageous effect as follows. The inspection is performed by using a method of inserting the master pins into the third through-hole of the master jig through the first through-hole of the master electrode assembly, sequentially from the master pin having a smaller diameter to the master pin having a larger diameter. Therefore, even a beginner who is not an expert may easily perform the inspection.

### [BRIEF DESCRIPTION OF THE DRAWING]

FIG. 1 is a diagram schematically illustrating a vertical cross section of a typical cylindrical secondary battery.
FIG. 2 is a diagram schematically illustrating a state before a negative electrode tab of the typical cylindrical secondary battery is subjected to resistance welding to a can.
FIG. 3 is a diagram schematically illustrating a state where a welding rod is inserted into the typical cylindrical secondary battery to weld a negative electrode tab to the can.
FIG. 4 is a diagram illustrating a welding jig inspection table for a cylindrical secondary battery according to the present disclosure.
FIG. 5 is a diagram illustrating an enlarged part A in FIG. 4.
FIG. 6 is a diagram illustrating a base plate adopted for the welding jig inspection table for the cylindrical secondary battery according to the present disclosure.
FIG. 7 is a diagram illustrating a radial cross section of a master electrode assembly adopted for the welding jig inspection table for the cylindrical secondary battery according to the present disclosure.
FIG. 8 is a side view of the master electrode assembly adopted for the welding jig inspection table for the cylindrical secondary battery according to the present disclosure.
FIG. 9 is a diagram illustrating a master jig adopted for the welding jig inspection table for the cylindrical secondary battery according to the present disclosure.
FIG. 10 is a diagram illustrating a state where the master jig in FIG. 9 is viewed from a side surface.
FIG. 11 is a diagram illustrating a master pin adopted for the welding jig inspection table for the cylindrical secondary battery according to the present disclosure.
FIG. 12 is a diagram illustrating a state where a plurality of welding jigs are fastened to the base plate coupled to a frame in the welding jig inspection table for the cylindrical secondary battery according to the present disclosure.
FIG. 13 is a diagram illustrating an enlarged part B in FIG. 12.

### [BEST MODE FOR CARRYING OUT THE INVENTION]

Advantages and features of the present disclosure and methods for achieving the advantages and the features will become apparent by referring to embodiments described below in detail together with the accompanying drawings. However, the present disclosure is not limited to the embodiments disclosed below, and may be implemented in various different forms. The present embodiments are provided only to make the disclosure of the present disclosure complete and to fully inform those skilled in the art to which the present disclosure belongs of the scope of the invention. The present disclosure is defined only by the scope of the claims. Therefore, in some embodiments, well-known process steps, well-known device structures, and well-known techniques are not specifically described in order to avoid ambiguity in the interpretation of the present disclosure. The same reference numerals refer to the same elements throughout the specification.

In order to clearly represent multiple layers and regions in the drawings, a thickness may be enlarged and illustrated. Similar elements are designated by the same drawing reference numerals throughout the specification. When it is described that one portion such as a layer, a film, a region, and a plate exists "above" the other portion, the description includes not only a case where one portion exists "directly above" the other portion, but also a case where still another portion exists therebetween. Conversely, when it is described that one portion exists "directly above" the other portion, the description means that no other portion exists therebetween. Furthermore, when itis described that one portion such as the layer, the film, the region, and the plate exists "below" the other portion, the description includes not only a case where one portion exists "directly below" the other portion, but also a case where still another portion exists therebetween. Conversely, when it is described that one portion exists "directly below" the other portion, the description means that no other portion exists therebetween.

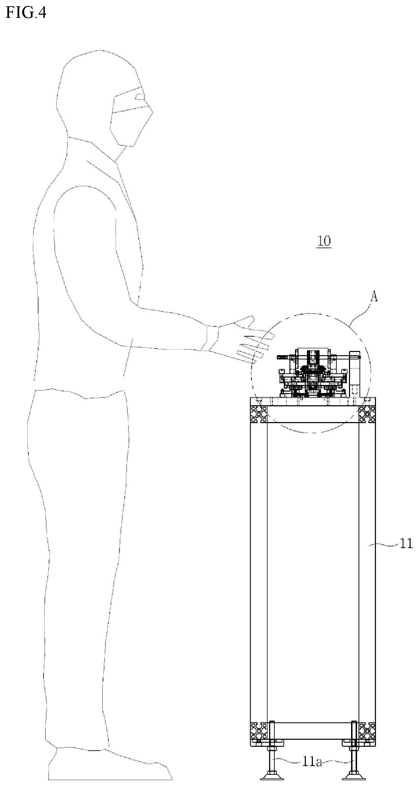

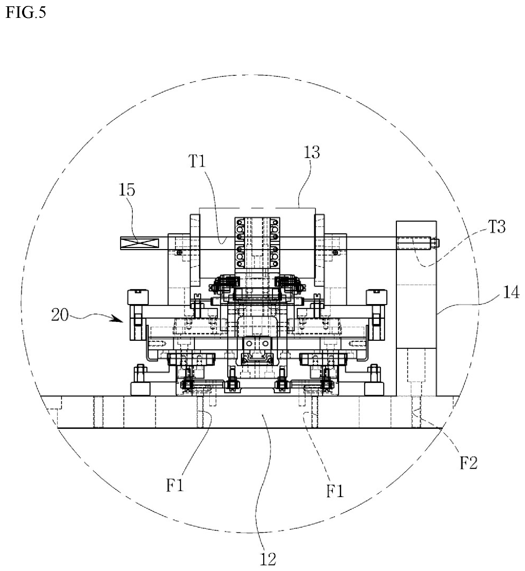

FIG. 4 is a diagram illustrating a welding jig inspection table for a cylindrical secondary battery according to the present disclosure, and FIG. 5 is a diagram illustrating an enlarged part A in FIG. 4.

A welding jig inspection table 10 for the cylindrical secondary battery according to the present disclosure is an inspection table for inspecting a welding jig 20 used in manufacturing the cylindrical secondary battery, and includes a frame 11, a base plate 12, a master electrode assembly 13, a master jig 14, and a master pin 15.

That is, the welding jig inspection table 10 according to the present disclosure is located inside a manufacturing line of the cylindrical secondary battery so that the welding jig 20 can be inspected inside the manufacturing line without carrying out the welding jig 20.

Accordingly, an unnecessary time consumed in inspecting the welding jig 20 may be reduced, and the welding jig 20 may be quickly and conveniently inspected.

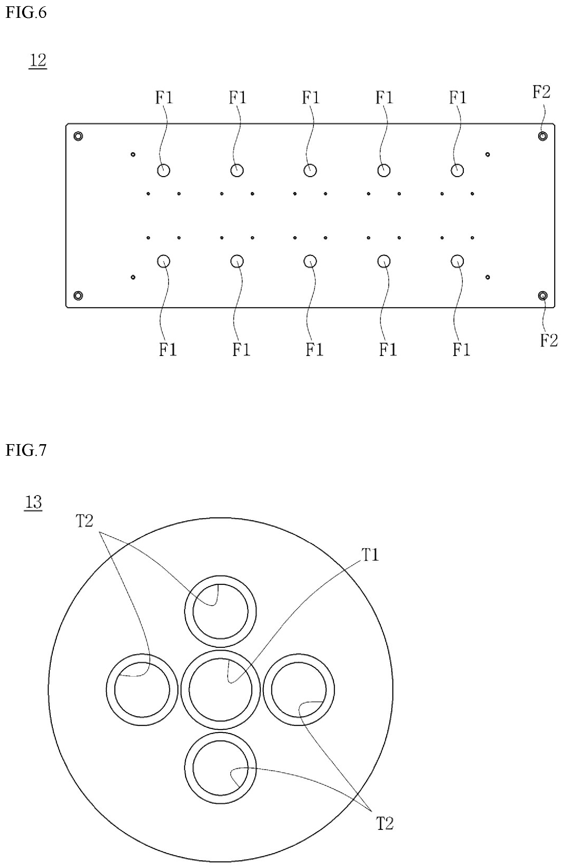

The base plate 12, the master electrode assembly 13, the master jig 14, and the master pin 15 which are adopted for the welding jig inspection table 10 according to the present disclosure will be described later with reference to FIGS. 6 to 13.

For example, the base plate 12, the master electrode assembly 13, the master jig 14, and the master pin 15 require precision machining in view of surface roughness, a geometric tolerance, and the like.

The frame 11 is located in a lower portion of the base plate 12 to support the base plate 12, and is formed to have a predetermined height.

As a whole, the frame 11 configured in this way may be formed in a hexahedral outer shape, and individual unit frames may be assembled to form a hexahedral shape, or may be formed as a single body to form the hexahedral shape.

In addition, the frame 11 may be provided to adjust a height depending on a height of an operator so that the operator may conveniently perform an inspection operation.

In addition, a plurality of pedestals 11a having a buffer function may be provided in a lower end of the frame 11, and the height of the frame 11 may be adjusted by adjusting a length of the pedestal 11a.

As a configuration for adjusting the length of the pedestal 11a, for example, a screw groove having a first screw thread may be formed on a bottom surface of the frame 11, and a second screw thread may be formed on an outer surface of the pedestal 11a to correspond to the first screw thread. When the pedestal 11a is rotated, the first screw thread of the screw groove formed on the bottom surface of the frame 11 and the second screw thread of the pedestals 11a perform a screwing motion. In this manner, the pedestal 11a may be lengthened or shortened.

Alternatively, when the height of the frame 11 can be adjusted, the length may be adjusted with any other configuration.

Meanwhile, a level may be installed in the frame 11 to check a horizontal state of the base plate 12 disposed on an upper surface of the frame 11.

FIG. 6 is a diagram illustrating the base plate adopted for the welding jig inspection table for the cylindrical secondary battery according to the present disclosure.

The base plate 12 is formed from a flat plate having a rectangle shape with a predetermined thickness, and is horizontally disposed in an upper portion of the frame 11.

When defects continuously occur during an operation of the manufacturing line of the cylindrical secondary battery, the welding jig 20 removed from the manufacturing line is disposed on an upper surface of the base plate 12.

In this base plate 12, a first fastening hole F1 penetrating in a thickness direction is formed so that the welding jig 20 can be fastened.

Preferably, a pair of the first fastening holes F1 may be formed separately from each other along a width direction of the base plate 12.

A predetermined fastening mechanism such as a bolt is fastened to a bottom surface of the welding jig 20 disposed in the base plate 12 through the pair of first fastening holes F1.

Meanwhile, a plurality of the pairs of first fastening holes F1 formed along the width direction of the base plate 12 may be formed along the length direction of the base plate 12.

The reason is to dispose the plurality of welding jigs 20 in the base plate 12.

In addition, a second fastening hole F2 penetrating in the thickness direction is formed in a one side end portion of the base plate 12 in the length direction, and a third fastening groove F3 is formed in the master jig 14 (to be described later) to communicate with the second fastening hole F2.

Accordingly, a fastening mechanism such as a bolt is fastened to the third fastening groove F3 through the second fastening hole F2. As a result, the master jig 14 is fastened to the base plate 12.

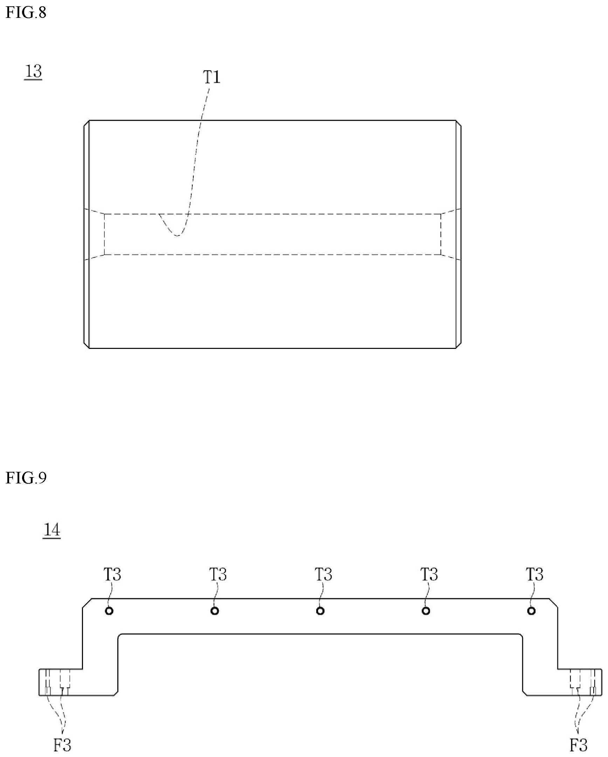

FIG. 7 is a diagram illustrating a radial cross section of the master electrode assembly adopted for the welding jig inspection table for the cylindrical secondary battery according to the present disclosure, and FIG. 8 is a side view of the master electrode assembly adopted for the welding jig inspection table for the cylindrical secondary battery according to the present disclosure.

The master electrode assembly 13 is manufactured to have an appearance almost similar to that of a jelly roll-shaped electrode assembly adopted for an actual cylindrical secondary battery, and is used to inspect various dimensions of the welding jig 20.

Accordingly, the master electrode assembly 13 adopted for the present disclosure is formed in a cylindrical shape in the jelly roll type, as in the jelly roll-shaped electrode assembly adopted for the actual cylindrical secondary battery.

A first through-hole T1 is formed along the length direction at a radial center of the master electrode assembly 13, and the master electrode assembly 13 is transversely disposed (so that the first through-hole T1 is horizontal) in the welding jig 20.

The master pin 15 is inserted into a third through-hole T3 formed in the master jig 14 (to be described later) through the first through-hole T1 formed in this way.

Meanwhile, a plurality of second through-holes T2 may be separated from each other around the first through-hole T1 of the master electrode assembly 13, and may be formed to penetrate along the length direction of the master electrode assembly 13.

Since the plurality of second through-holes T2 are formed around the first through-hole T1 of the master electrode assembly 13 in this way, a weight of the master electrode assembly 13 is reduced. In this manner, when the master electrode assembly 13 is repeatedly fastened to and separated from the welding jig 20, deformation of the welding jig 20 may be prevented.

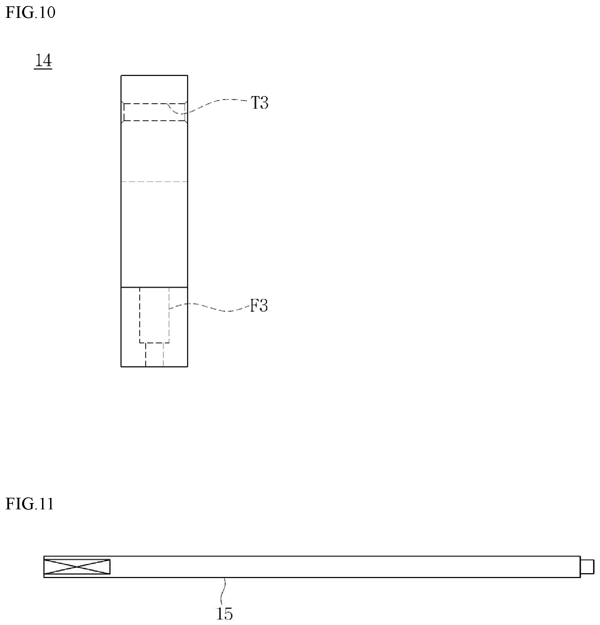

FIG. 9 is a diagram illustrating the master jig adopted for the welding jig inspection table for the cylindrical secondary battery according to the present disclosure, and FIG. 10 is a diagram illustrating a state where the master jig in FIG. 9 is viewed from a side surface.

The master jig 14 is formed in a shape of a bar having a predetermined length and a predetermined width, and has a shape in which both end portions are bent downward, and are transversely bent again in an outward direction. For example, the master jig 14 may be formed in a U-shape or an inverted U-shape.

The master jig 14 is disposed on one side of the base plate 12, and the third through-hole T3 located concentrically with the first through-hole T1 formed in the master electrode assembly 13 is formed.

Meanwhile, in the master jig 14, as will be described later, a plurality of the third through-holes T3 may be formed o be respectively located concentrically with the first through-holes T1 of the master electrode assemblies 13 respectively disposed in the plurality of welding jigs 20.

On both end portions bent downward and transversely bent again in the master jig 14, a third fastening groove F3 is formed to communicate with the second fastening hole F2 formed in the base plate 12, and a predetermined fastening mechanism such as a bolt may be fastened to the third fastening groove F3 through the second fastening hole F2.

FIG. 11 is a diagram illustrating the master pin adopted for the welding jig inspection table for the cylindrical secondary battery according to the present disclosure.

The master pin 15 has a predetermined length, and a plurality of the master pins 15 are provided to have mutually different diameters.

The master pin 15 provided in this way is inserted into the third through-hole T3 formed in the master jig 14 through the first through-hole T1 formed in the master electrode assembly 13.

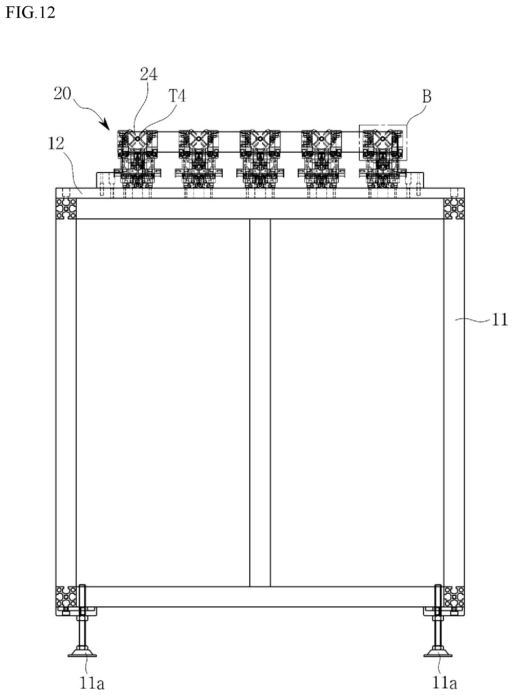

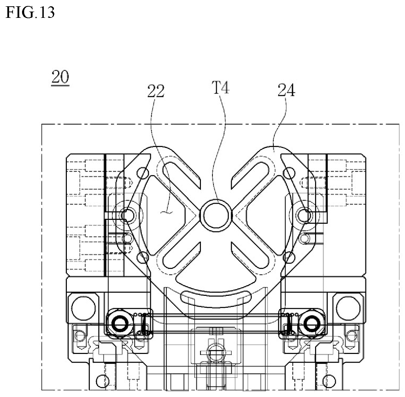

FIG. 12 is a diagram illustrating a state where the plurality of welding jigs are fastened to the base plate coupled to the frame in the welding jig inspection table for the cylindrical secondary battery according to the present disclosure, and FIG. 13 is a diagram illustrating an enlarged part B of FIG. 12.

The pair of first fastening holes F1 formed along the width direction of the base plate 12 so that the plurality of welding jigs 20 are separated from each other to be fastened to each other, and a plurality of the pairs of first fastening holes F1 are formed along the length direction of the base plate 12.

In addition, the master electrode assembly 13 is disposed in each of the welding jigs 20.

The welding jig 20 configured in this way is formed to have an open upper portion.

In addition, the welding jig 20 has a mounting space 22 on which the master electrode assembly 13 is mounted through the open upper portion.

An inner surface of the mounting space 22 of the welding jig 20 may be formed to correspond to an outer surface of the master electrode assembly 13.

For example, an outer peripheral shape of the master electrode assembly 13 may be formed as a circle or an ellipse, and an inner peripheral shape of an inner surface of the mounting space 22 of the welding jig 20 may be formed as a semicircle or a semi-ellipse.

Fixing members 24 for fixing the master electrode assembly 13 are respectively installed on a front side and a rear side of the mounting space 22.

A fourth through-hole T4 is formed at the center of the fixing member 24, and edge portions of the fixing member 24 are respectively fixed to a front surface and a rear surface of the master electrode assembly 13.

The fourth through-hole T4 of the fixing member 24 is located concentrically with the first through-hole T1 of the master electrode assembly 13 and the third through-hole T3 of the master jig 14.

In this way, the present disclosure has an advantage as follows. The plurality of welding jigs 20 are disposed in the welding jig inspection table 10, and multiple welding jigs 20 are inspected during a single inspection operation. In this manner, an inspection time may be significantly reduced, and costs for the inspection may be reduced.

Meanwhile, the welding jig inspection method for the cylindrical secondary battery according to the present disclosure is the welding jig inspection method for the cylindrical secondary battery, which uses the above-described welding jig inspection table 10 for the cylindrical secondary battery.

Specifically, the master pins 15 are inserted into the third through-hole T3 of the master jig 14 through the first through-hole T1 of the master electrode assembly 13, sequentially from the master pin 15 having a smaller diameter to the master pin 15 having a larger diameter.

This insertion operation of the master pin 15 is performed until the master pin 15 is no longer inserted into the first through-hole T1 and the third through-hole T3.

In this way, a concentricity level may be identified through the diameter of the master pin 15 that is not yet inserted into the first through-hole T1 and the third through-hole T3.

In this way, according to the present disclosure, the welding jig 20 is inspected by using a method of inserting the master pins 15 into the third through-hole T3 of the master jig 14 through the first through-hole T1 of the master electrode assembly 13, sequentially from the master pin 15 having the smaller diameter to the master pin 15 having the larger diameter. Therefore, even a beginner who is not an expert may easily perform the inspection.

### [DESCRIPTION OF REFERENCE NUMERALS]

10: Welding jig inspection table
11: Frame
12: Base plate
13: Master electrode assembly
14: Master jig
15: Master pin
20: Welding jig

## Claims

1. A welding jig inspection table for inspecting a welding jig used in manufacturing a cylindrical secondary battery, the welding jig inspection table comprising:
a base plate horizontally disposed, the base plate having an upper surface configured to support the welding jig;
a master electrode assembly having a first through-hole extending along a length direction at a radial center of the master electrode assembly, the master electrode assembly being transversely disposed in the welding jig;
a master jig disposed on a first side of the base plate, the master jig having a third through-hole configured to be concentrically arranged with the first through-hole of the master electrode assembly; and
a plurality of master pins having mutually different diameters, each master pin having a predetermined length, each master pin being configured to be inserted into the third through-hole of the master jig after passing through the first through-hole of the master electrode assembly.

2. The welding jig inspection table of claim 1, further comprising a frame located at a lower portion of the base plate, the frame being configured to support the base plate.

3. The welding jig inspection table of claim 2, further comprising a plurality of pedestals located at a lower end of the frame.

4. The welding jig inspection table of claim 1, wherein the welding jig is provided in plurality, and
wherein the base plate includes a plurality of first fastening holes such that the plurality of welding jigs are separated from each other while being fastened to the base plate.

5. The welding jig inspection table of claim 4, wherein the master electrode assembly is provided in plurality such that each master electrode assembly is disposed in a corresponding one of the plurality of welding jigs.

6. The welding jig inspection table for a cylindrical secondary battery of claim 5, wherein the base plate includes a second fastening hole,
wherein the master jig includes a third fastening groove being configured to communicate with the second fastening hole, and
wherein a fastening mechanism is fastened to the third fastening groove through the second fastening hole.

7. The welding jig inspection table of claim 6, wherein the third through-hole is provided in plurality in the master jig such that each of the third through-holes is located concentrically with the first through-hole of the master electrode assembly disposed in each of the plurality of welding jigs.

8. The welding jig inspection table of claim 1, wherein the master electrode assembly is configured to have a similar shape of a jelly roll electrode assembly.

9. The welding jig inspection table of claim 8, wherein the master electrode assembly includes a plurality of second through-holes spaced around the first through-hole of the master electrode assembly, the second through-holes extending along the length direction of the master electrode assembly.

10. The welding jig inspection table of claim 1, wherein the welding jig has an open upper portion, and
wherein the welding jig has a mounting space configured to support the master electrode assembly when the master electrode assembly is mounted through the open upper portion.

11. The welding jig inspection table of claim 10, wherein an inner surface of the mounting space is configured to correspond to an outer surface of the master electrode assembly.

12. The welding jig inspection table of claim 11, further comprising fixing members configured to fix the master electrode assembly at a front side and a rear side of the mounting space,
wherein each fixing member includes a fourth through-hole at a center thereof, the fourth through-hole being located concentrically with the first through-hole of the master electrode assembly and the third through-hole of the master jig.

13. A method of inspecting a welding jig for a cylindrical secondary battery using the welding jig inspection table of claim 1, the method comprising:
sequentially inserting the master pins into the third through-hole of the master jig through the first through-hole of the master electrode assembly from a master pin having a smaller diameter to a master pin having a larger diameter until the master pins are no longer insertable into the first through-hole and the third through-hole; and
identifying a concentricity level based on the diameters of the master pins that are not insertable into the first through-hole and the third through-hole.
